# EUROPEAN PATENT APPLICATION

(11) **EP 4 169 992 A1**
(43) Date of publication of application: **26.04.2023**
(21) Application number: 21825066.0
(22) Date of filing: 17.06.2021
(51) Int. Cl.: C09D 163/00, C09D 201/00, B32B 15/092, H01F 1/18, C23C 22/00, H01F 27/245, H02K 1/04

(54) **COATING COMPOSITION FOR ELECTROMAGNETIC STEEL SHEETS, ELECTROMAGNETIC STEEL SHEET, LAMINATED CORE AND DYNAMO-ELECTRIC MACHINE**

(30) Priority: 17.06.2020 JP 2020104234
(71) Applicant: NIPPON STEEL CORPORATION, Chiyoda-ku Tokyo 100-8071 (JP)
(72) Inventor: TAKEDA Kazutoshi, Tokyo 100-8071 (JP); TAKATANI Shinsuke, Tokyo 100-8071 (JP); FUKUCHI Minako, Tokyo 100-8071 (JP); TANAKA Ichiro, Tokyo 100-8071 (JP)
(74) Representative: Zimmermann & Partner Patentanwälte mbB
(86) International application number: PCT/JP2021/023026
(87) International publication number: WO 2021/256531

(57) **Abstract**

A coating composition for an electrical steel sheet including an epoxy resin, a latent epoxy resin curing agent, and a thermoplastic elastomer, wherein the thermoplastic elastomer has a melting point of 100°C or higher and 200°C or lower and a bending elastic modulus of more than 5 MPa and 100 MPa or less, and wherein the amount of the thermoplastic elastomer with respect to a total amount of 100 parts by mass of the epoxy resin and the latent epoxy resin curing agent is 10 parts by mass or more and less than 40 parts by mass.

## Description

### [Technical Field]

The present invention relates to a coating composition for an electrical steel sheet, an electrical steel sheet, a laminated core and an electric motor. Priority is claimed on Japanese Patent Application No. 2020-104234, filed June 17, 2020, the content of which is incorporated herein by reference.

### [Background Art]

As a core (iron core) used in an electric motor, a laminated core in which a plurality of electrical steel sheets are bonded to each other and laminated is known. Fastening and welding are known as methods of bonding electrical steel sheets to each other. However, in fastening and welding, a magnetic property (core iron loss) of electrical steel sheets may deteriorate due to mechanical strain and thermal strain during processing.

As a bonding method other than fastening and welding, for example, a method of adhering electrical steel sheets having an insulation coating having an adhesive ability formed on the surface to each other is known (Patent Document 1). Adhesion using the insulation coating does not impart mechanical strain or thermal strain and therefore it has better core iron loss than fastening and welding. The epoxy resin has little change in volume, has excellent heat resistance, oil resistance, and chemical resistance, and is excellent as an adhesive for adhering electrical steel sheets to each other (Patent Documents 2 and 3).

In recent years, in response to a request for further improvement of motor efficiency, further reduction of core iron loss has been required. Thinning the electrical steel sheet is effective in reducing core iron loss. However, since the Young's modulus of a steel sheet decreases as the sheet thickness decreases, it is required not to apply stress strain to the steel sheet, which causes deterioration of iron loss. In addition, in a drive motor of an electric automobile or the like, the temperature changes drastically from room temperature when driving begins to a high temperature during driving. Therefore, it is important to have excellent heat resistance with which sufficient adhesive strength can be maintained even with exposure to a high temperature during driving while reducing core iron loss.

Resins having excellent heat resistance are hard at room temperature and tend to apply large stress to the laminated core. On the other hand, resins having an appropriate hardness near room temperature are soft and inferior in heat resistance at a high temperature. Epoxy resins have excellent heat resistance, but are hard and have low toughness. Therefore, stress strain is applied to the steel sheet due to curing during adhesion, and thus iron loss deteriorates as the steel sheet is thinned. In addition, if the toughness is low, there is a risk of adhesion being released due to vibration impact during driving.

### [Citation List]

### [Patent Document]

[Patent Document 1]
   Japanese Unexamined Patent Application, First Publication No. 2017-011863
[Patent Document 2]
   Japanese Unexamined Patent Application, First Publication No. 2000-173816
[Patent Document 3]
   PCT International Publication No. WO 2004/070080

### [Summary of the Invention]

### [Problems to be Solved by the Invention]

An object of the present invention is to provide a coating composition for an electrical steel sheet that can achieve both the magnetic property of a laminated core and heat resistance with which an adhesive strength between electrical steel sheets can be maintained even in a high temperature state during driving, an electrical steel sheet using the same, a laminated core and an electric motor.

### [Means for Solving the Problem]

The present invention includes the following aspects.
[1] A coating composition for an electrical steel sheet, including an epoxy resin, a latent epoxy resin curing agent, and a thermoplastic elastomer, wherein the thermoplastic elastomer has a melting point of 100°C or higher and 200°C or lower and a bending elastic modulus of more than 5 MPa and 100 MPa or less, and wherein the amount of the thermoplastic elastomer with respect to a total amount of 100 parts by mass of the epoxy resin and the latent epoxy resin curing agent is 10 parts by mass or more and less than 40 parts by mass.
[2] The coating composition for an electrical steel sheet according to [1], wherein the thermoplastic elastomer is at least one selected from among an olefin-based elastomer, a urethane-based elastomer and a polyester-based elastomer.
[3] An electrical steel sheet having an insulation coating formed by applying the coating composition for an electrical steel sheet according to [1] or [2] to the surface of a base steel sheet.
[4] The electrical steel sheet according to [3], wherein the base steel sheet has an average sheet thickness of 0.30 mm or less.
[5] A laminated core in which a plurality of electrical steel sheets according to [3] or [4] are laminated and are adhered to each other.
[6] An electric motor comprising the laminated core according to [5].

### [Effects of the Invention]

According to the present invention, it is possible to provide a coating composition for an electrical steel sheet that can achieve both the magnetic property of a laminated core and heat resistance with which an adhesive strength between electrical steel sheets can be maintained even in a high temperature state during driving, an electrical steel sheet using the same, a laminated core and an electric motor.

### [Brief Description of Drawings]

Fig. 1 is a cross-sectional view of an electric motor including a laminated core according to a first embodiment of the present invention.
Fig. 2 is a side view of the laminated core.
Fig. 3 is a cross-sectional view taken along the line A-A in Fig. 2.
Fig. 4 is a plan view of a material forming the laminated core.
Fig. 5 is a cross-sectional view taken along the B-B in Fig. 4.
Fig. 6 is an enlarged view of a part C in Fig. 5.
Fig. 7 is a side view of a production device used for producing the laminated core.

### [Embodiment(s) for implementing the Invention]

Hereinafter, a laminated core according to one embodiment of the present invention, an electric motor including the laminated core, and a material forming the laminated core will be described with reference to the drawings. Here, in the present embodiment, as an electric motor, an electric motor, specifically, an AC electric motor, more specifically, a synchronous electric motor, and still more specifically, a permanent magnet field type electric motor will be described as an example. This type of electric motor is suitably used for, for example, an electric automobile.

### (Electric motor 10)

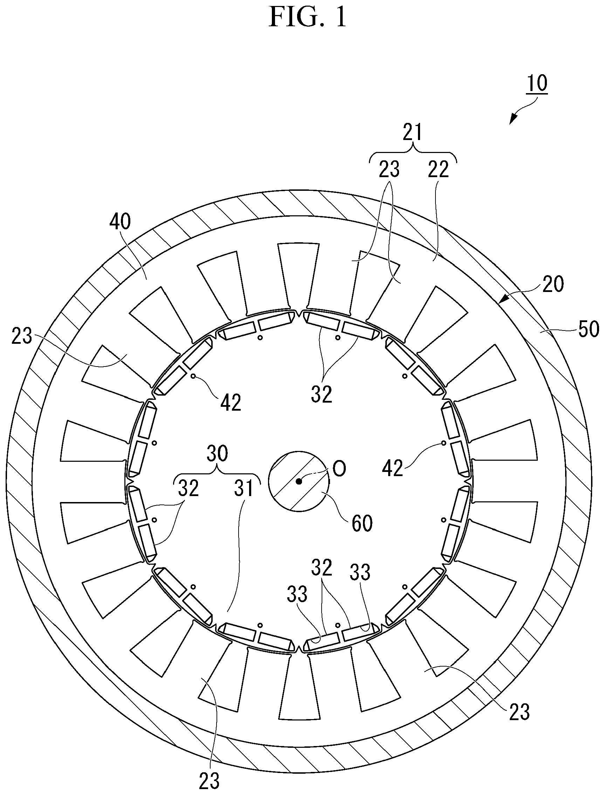

As shown in Fig. 1, an electric motor 10 includes a stator 20, a rotor 30, a case 50, and a rotating shaft 60. The stator 20 and the rotor 30 are accommodated in the case 50. The stator 20 is fixed into the case 50.

In the present embodiment, as the electric motor 10, an inner rotor type machine in which the rotor 30 is positioned inside the stator 20 in the radial direction is used. However, as the electric motor 10, an outer rotor type machine in which the rotor 30 is positioned outside the stator 20 may be used. In addition, in the present embodiment, the electric motor 10 is a 12-pole and 18-slot three-phase AC motor. However, the number of poles, the number of slots, the number of phases, and the like can be appropriately changed.

The electric motor 10 can rotate at a rotational speed of 1,000 rpm by applying, for example, an excitation current having an effective value of 10 A and a frequency of 100 Hz to each phase.

The stator 20 includes an adhesive laminated core for a stator (hereinafter referred to as a stator core) 21 and a winding (not shown).

The stator core 21 includes a circular core back part 22 and a plurality of teeth parts 23. In the following, the center axis O direction of the stator core 21 (or the core back part 22) will be referred to as an axial direction, the radial direction (direction orthogonal to the center axis O) of the stator core 21 (or the core back part 22) will be referred to as a radial direction, and the circumferential direction (direction around the center axis O) of the stator core 21 (or the core back part 22) will be referred to as a circumferential direction.

The core back part 22 is formed in an annular shape in a plan view of the stator 20 when viewed from the axial direction.

The plurality of teeth parts 23 protrude from the inner peripheral of the core back part 22 in a radially inward direction (toward the center axis O of the core back part 22 in the radial direction). The plurality of teeth parts 23 are arranged at equal angular intervals in the circumferential direction. In the present embodiment, 18 teeth parts 23 are provided at every 20 degrees in central angles centered on the center axis O. The plurality of teeth parts 23 are formed so that they have the same shape and the same size. Therefore, the plurality of teeth parts 23 have the same thickness size.

The winding is wound around the teeth parts 23. The winding may be concentrated winding or distributed winding.

The rotor 30 is arranged inside the stator 20 (the stator core 21) in the radial direction. The rotor 30 includes a rotor core 31 and a plurality of permanent magnets 32.

The rotor core 31 is formed in a circular (annular) shape and arranged coaxially with the stator 20. The rotating shaft 60 is arranged in the rotor core 31. The rotating shaft 60 is fixed to the rotor core 31.

The plurality of permanent magnets 32 are fixed to the rotor core 31. In the present embodiment, a pair of permanent magnets 32 form one magnetic pole. The plurality of sets of permanent magnets 32 are arranged at equal angular intervals in the circumferential direction. In the present embodiment, 12 sets (24 in total) of permanent magnets 32 are provided at every 30 degrees in central angles centered on the center axis O.

In the present embodiment, an embedded magnet type motor is used as the permanent magnet field type electric motor. In the rotor core 31, a plurality of through-holes 33 that penetrate the rotor core 31 in the axial direction are formed. The plurality of through-holes 33 are provided to correspond to the arrangement of the plurality of permanent magnets 32. The permanent magnets 32 that are arranged in the corresponding through-holes 33 are fixed to the rotor core 31. Fixing of each permanent magnet 32 to the rotor core 31 can be realized by, for example, adhering the outer surface of the permanent magnet 32 and the inner surface of the through-hole 33 with an adhesive. Here, as the permanent magnet field type electric motor, a surface magnet type motor may be used in place of the embedded magnet type.

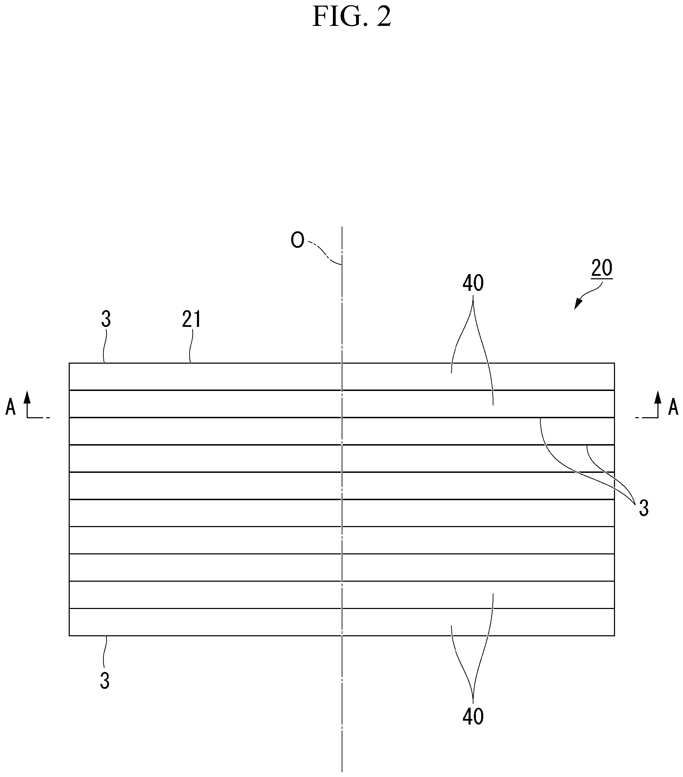

Both the stator core 21 and the rotor core 31 are laminated cores. For example, as shown in Fig. 2, the stator core 21 is formed by laminating a plurality of electrical steel sheets 40 in the lamination direction.

Here, the lamination thickness (total length along the center axis O) of each of the stator core 21 and the rotor core 31 is, for example, 50.0 mm. The outer diameter of the stator core 21 is, for example, 250.0 mm. The inner diameter of the stator core 21 is, for example, 165.0 mm. The outer diameter of the rotor core 31 is, for example, 163.0 mm. The inner diameter of the rotor core 31 is, for example, 30.0 mm. However, these values are examples, and the lamination thickness, the outer diameter and the inner diameter of the stator core 21, and the lamination thickness, the outer diameter and the inner diameter of the rotor core 31 are not limited to these values. Here, the inner diameter of the stator core 21 is based on the tip part of the teeth part 23 in the stator core 21. That is, the inner diameter of the stator core 21 is the diameter of an imaginary circle inscribed in the tip parts of all the teeth parts 23.

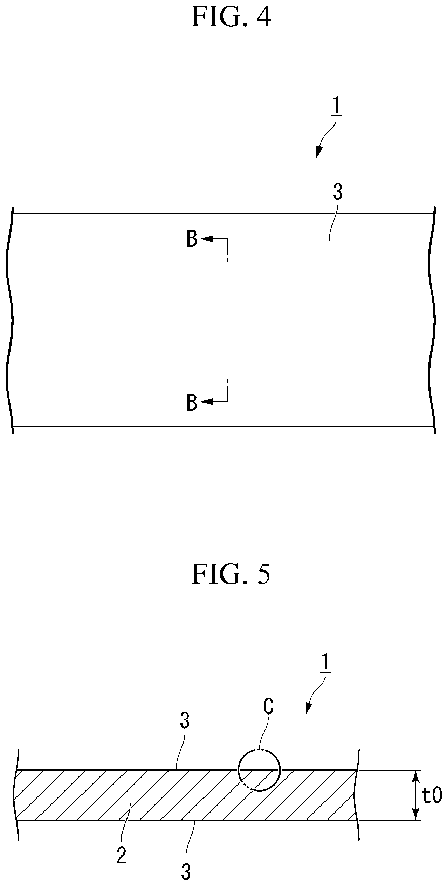

Each electrical steel sheet 40 forming the stator core 21 and the rotor core 31 is formed, for example, by punching a material 1 as shown in Fig. 4 to Fig. 6. The material 1 is an electrical steel sheet that is a base of the electrical steel sheet 40. As the material 1, for example, a strip-shaped steel sheet and a cut sheet is an exemplary example.

Although description of the laminated core is in progress, the material 1 will be described below. Here, in this specification, the strip-shaped steel sheet that is a base of the electrical steel sheet 40 may be referred to as the material 1. A steel sheet having a shape used for a laminated core obtained by punching the material 1 may be referred to as the electrical steel sheet 40.

### (Material 1)

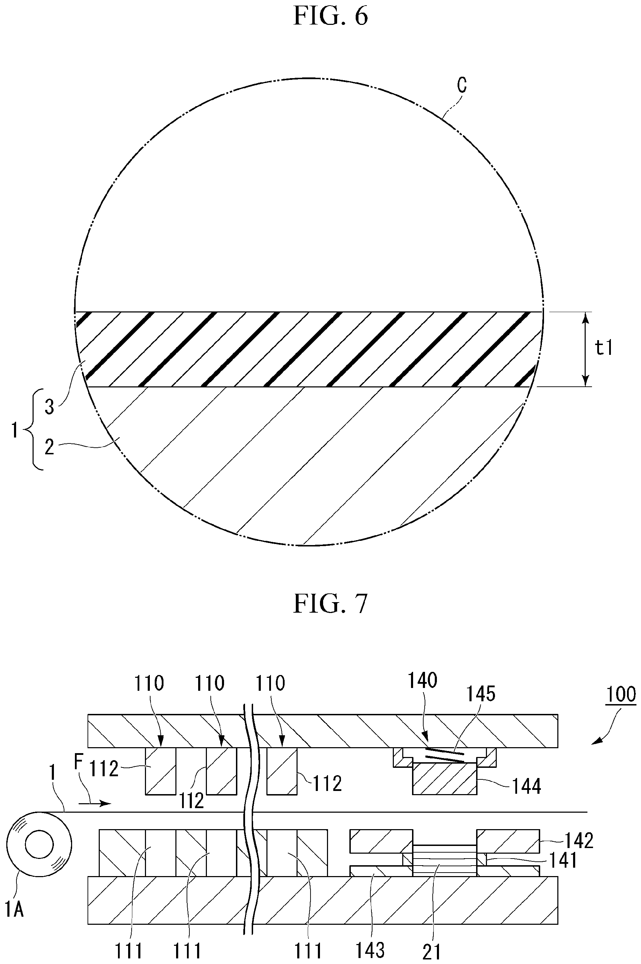

For example, the material 1 that is wound around a coil 1A shown in Fig. 7 is handled. In the present embodiment, a non-oriented electrical steel sheet is used as the material 1. As the non-oriented electrical steel sheet, a non-oriented electrical steel sheet according to JIS C 2552: 2014 can be used. However, as the material 1, a grain-oriented electrical steel sheet may be used in place of the non-oriented electrical steel sheet. As the grain-oriented electrical steel sheet in this case, a grain-oriented electrical steel sheet according to JIS C 2553: 2019 can be used. In addition, a non-oriented thin electrical steel strip or a grain-oriented thin electrical steel strip according to JIS C 2558: 2015 can be used.

The upper and lower limit values of an average sheet thickness t0 of the material 1 are set, for example, as follows, in consideration of a case in which the material 1 is used for the electrical steel sheet 40.

As the material 1 becomes thinner, the production cost of the material 1 increases. Therefore, in consideration of the production cost, the lower limit value of the average sheet thickness t0 of the material 1 is 0.10 mm, preferably 0.15 mm, and more preferably 0.18 mm.

On the other hand, when the material 1 is too thick, the production cost is favorable, but when the material 1 is used for the electrical steel sheet 40, the eddy current loss increases and the core iron loss deteriorates. Therefore, in consideration of the core iron loss and the production cost, the upper limit value of the average sheet thickness t0 of the material 1 is 0.65 mm, preferably 0.35 mm, and more preferably 0.30 mm.

0.20 mm may be exemplified as a value that satisfies the above range of the average sheet thickness t0 of the material 1.

Here, the average sheet thickness t0 of the material 1 includes not only the thickness of a base steel sheet 2 to be described below but also the thickness of an insulation coating 3. In addition, a method of measuring the average sheet thickness t0 of the material 1 is, for example, the following measurement method. For example, when the material 1 is wound in the shape of the coil 1A, at least a part of the material 1 is unwound into a flat sheet shape. In the material 1 unwound into a flat sheet shape, a predetermined position (for example, a position separated from the edge of the material 1 in the longitudinal direction by 10% of the total length of the material 1) on the material 1 in the longitudinal direction is selected. At the selected position, the material 1 is divided into five areas in the width direction thereof. At four locations that are boundaries of these five areas, the sheet thickness of the material 1 is measured. The average value of the sheet thicknesses at four locations can be set as the average sheet thickness t0 of the material 1.

The upper and lower limit values of the average sheet thickness t0 of the material 1 can be naturally used as the upper and lower limit values of the average sheet thickness t0 of the electrical steel sheet 40. Here, a method of measuring the average sheet thickness t0 of the electrical steel sheet 40 is, for example, the following measurement method. For example, the lamination thickness of the laminated core is measured at four locations (that is, every 90 degrees around the center axis O) at equal intervals in the circumferential direction. Each of the measured lamination thicknesses at four locations is divided by the number of laminated electrical steel sheets 40 to calculate the sheet thickness per sheet. The average value of the sheet thicknesses at four locations can be set as the average sheet thickness t0 of the electrical steel sheet 40.

As shown in Fig. 5 and Fig. 6, the material 1 includes the base steel sheet 2 and the insulation coating 3. In the material 1, both surfaces of the strip-shaped base steel sheet 2 are covered with the insulation coating 3. In the present embodiment, most of the material 1 is formed with the base steel sheet 2, and the insulation coating 3 thinner than the base steel sheet 2 is laminated on the surface of the base steel sheet 2.

The chemical composition of the base steel sheet 2 includes 2.5% to 4.5% of Si in mass%, as shown below in units of mass%. Here, when the chemical composition is within the above range, the yield strength of the material 1 (the electrical steel sheet 40) can be set to, for example, 380 MPa or more and 540 MPa or less.
Si: 2.5% to 4.5%
Al: 0.001% to 3.0%
Mn: 0.05% to 5.0%

### The remainder: Fe and impurities

When the material 1 is used for the electrical steel sheet 40, the insulation coating 3 exhibits insulation performance between the electrical steel sheets 40 adjacent to each other in the lamination direction. In addition, in the present embodiment, the insulation coating 3 has an adhesive ability, and adheres the electrical steel sheets 40 adjacent to each other in the lamination direction. The insulation coating 3 may have a single-layer structure or a multi-layer structure. More specifically, for example, the insulation coating 3 may have a single-layer structure having both insulation performance and an adhesive ability or may have a multi-layer structure including an underlying insulation coating having excellent insulation performance and a top insulation coating having an excellent adhesive ability. Here, having an adhesive ability means exhibiting an adhesive strength of a predetermined value or more under a predetermined temperature condition.

In the present embodiment, the insulation coating 3 entirely covers both the surfaces of the base steel sheet 2 without gaps. However, as long as the above insulation performance and adhesive ability are secured, a part of the layer of the insulation coating 3 does not have to cover both surfaces of the base steel sheet 2 without gaps. In other words, a part of the layer of the insulation coating 3 may be provided intermittently on the surface of the base steel sheet 2. However, in order to secure the insulation performance, both surfaces of the base steel sheet 2 need to be covered with the insulation coating 3 so that none of surface is exposed. Specifically, when the insulation coating 3 does not have an underlying insulation coating having excellent insulation performance and has a single-layer structure having both insulation performance and an adhesive ability, the insulation coating 3 needs to be formed over the entire surface of the base steel sheet 2 without gaps. On the other hand, when the insulation coating 3 has a multi-layer structure having an underlying insulation coating having excellent insulation performance and a top insulation coating having an excellent adhesive ability, even if the underlying insulation coating is formed over the entire surface of the base steel sheet without gaps and the top insulation coating is provided intermittently in addition to forming both the underlying insulation coating and the top insulation coating over the entire surface of the base steel sheet 2 without gaps, it is possible to achieve both the insulation performance and the adhesive ability.

The coating composition for forming an underlying insulation coating is not particularly limited, and for example, a general treatment agent such as a chromic acid-containing treatment agent or a phosphate-containing treatment can be used.

The insulation coating having an adhesive ability is coated with a coating composition for an electrical steel sheet including an epoxy resin, a latent epoxy resin curing agent, and a thermoplastic elastomer.

The insulation coating composed of the coating composition for an electrical steel sheet is in an uncured state or a semi-cured state (B stage) before heating and pressurizing when a laminated core is produced, a curing reaction proceeds by heating during heating and pressurizing, and an adhesive ability is exhibited. The coating composition for an electrical steel sheet may be used for forming an insulation coating having a single-layer structure or may be used for forming a top insulation coating provided on an underlying insulation coating.

As the epoxy resin, a general epoxy resin can be used, and specifically, any epoxy resin having two or more epoxy groups in one molecule can be used without particular limitation. Examples of such epoxy resins include bisphenol A type epoxy resins, bisphenol F type epoxy resins, phenol novolak type epoxy resins, cresol novolak type epoxy resins, alicyclic epoxy resins, glycidyl ester type epoxy resins, glycidylamine type epoxy resins, hydantoin type epoxy resins, isocyanurate type epoxy resins, acrylic acid-modified epoxy resins (epoxy acrylate), phosphorus-containing epoxy resins, and halides thereof (brominated epoxy resins, etc.), hydrogen additives and the like. The epoxy resins may be used alone or two or more thereof may be used in combination.

The coating composition for an electrical steel sheet may contain an acrylic resin.

The acrylic resin is not particularly limited. Examples of monomers used for acrylic resins include unsaturated carboxylic acids such as acrylic acid and methacrylic acid, and (meth)acrylates such as methyl (meth)acrylate, ethyl (meth)acrylate, n-butyl (meth)acrylate, isobutyl (meth)acrylate, cyclohexyl (meth)acrylate, 2-ethylhexyl (meth)acrylate, 2-hydroxyethyl (meth)acrylate, and hydroxypropyl (meth)acrylate. Here, the (meth)acrylate is acrylate or methacrylate. The acrylic resins may be used alone or two or more thereof may be used in combination.

The acrylic resin may have a structural unit derived from a monomer other than an acrylic monomer. Examples of other monomers include ethylene, propylene, and styrene. The other monomers may be used alone or two or more thereof may be used in combination.

When an acrylic resin is used, it may be used as an acrylic-modified epoxy resin obtained by grafting an acrylic resin onto an epoxy resin. In the coating composition for an electrical steel sheet, it may be contained as a monomer forming an acrylic resin.

The latent epoxy resin curing agent is a type of curing agent that cures an epoxy resin and starts a curing reaction when heated to a predetermined temperature. Examples of latent epoxy resin curing agents include aromatic polyamines, acid anhydrides, phenolic curing agents, dicyandiamides, boron trifluoride-amine complexes, and organic acid hydrazides.

Examples of aromatic polyamines include m-phenylenediamine, diaminodiphenyl methane, diaminodiphenylethane, and diaminodiphenyl sulfone.

Examples of acid anhydrides include phthalic anhydride, hexahydrophthalic anhydride, tetrahydrophthalic anhydride, pyromellitic dianhydride, and pyromellitic acid anhydride, and among these, an acid anhydride which has a melting point of 160°C or higher and is solid at room temperature is preferable, and trimellitic anhydride, and benzophenone tetracarboxylic anhydride are particularly preferable.

Examples of phenolic curing agents include phenol novolak resins, cresol novolak resins, bisphenol novolak resins, triazine-modified phenol novolak resins, and phenol resol resins.

In consideration of the heat resistance of the cured product, as the latent epoxy resin curing agent, aromatic polyamines, phenolic curing agents, and dicyandiamides are preferable, and phenol resol resins, diaminodiphenyl methane, and dicyandiamides are more preferable. The latent epoxy resin curing agents may be used alone or two or more thereof may be used in combination.

The lower limit value of the amount of the latent epoxy resin curing agent in the coating composition for an electrical steel sheet with respect to 100 parts by mass of the epoxy resin is preferably 1 part by mass, and more preferably 2 parts by mass. The upper limit value of the amount of the latent epoxy resin curing agent is preferably 20 parts by mass, and more preferably 15 parts by mass.

The thermoplastic elastomer is a compound composed of a soft segment and a hard segment that retains rubber elasticity, and one that can be finely dispersed in an epoxy resin is preferable.

The melting point of the thermoplastic elastomer is 100°C or higher and 200°C or lower. When the melting point of the thermoplastic elastomer is equal to or larger than the lower limit value, the adhesive strength at a high temperature is maintained. When the melting point of the thermoplastic elastomer is equal to or less than the upper limit value, the core iron loss is favorable.

The lower limit value of the melting point of the thermoplastic elastomer is preferably 90°C, more preferably 110°C, and still more preferably 130°C or higher. The upper limit value of the melting point of the thermoplastic elastomer is preferably 180°C, and more preferably 160°C.

Here, "melting point" is a value measured at a temperature rise rate of 10°C/min according to JIS K7121 (1987) using a differential scanning calorimeter (DSC).

The bending elastic modulus of the thermoplastic elastomer is more than 5 MPa and 100 MPa or less. When the bending elastic modulus of the thermoplastic elastomer exceeds the lower limit value, it is possible to prevent the thermoplastic elastomer from protruding from the end due to pressurization during adhesion. When the bending elastic modulus of the thermoplastic elastomer is equal to or less than the upper limit value, the core iron loss is favorable.

The lower limit value of the bending elastic modulus of the thermoplastic elastomer is preferably 6 MPa, and more preferably 7 MPa. The upper limit value of the bending elastic modulus of the thermoplastic elastomer is preferably 80 MPa, and more preferably 60 MPa.

Here, the bending elastic modulus is measured under the condition of a test speed of 10 mm/min (1 mm/min when the test piece has a size of 3.5 mm or less) according to JIS K 7171 (2008).

As the thermoplastic elastomer, at least one selected from among an olefin-based elastomer, a urethane-based elastomer and a polyester-based elastomer is preferable because it is easy to achieve both the magnetic property and heat resistance. The thermoplastic elastomers may be used alone or two or more thereof may be used in combination.

Examples of olefin-based elastomers include those obtained by combining or mixing an ethylene-propylene copolymer with polypropylene.

Examples of urethane-based elastomers include compounds having a urethane bond in which diisocyanate and a diol are reacted. The viscoelastic properties of the urethane-based elastomer can be adjusted by the length of the carbon chain of the diol.

Examples of diisocyanates include hexamethylene diisocyanate, dicyclohexylmethane diisocyanate, diphenyl-methane diisocyanate, tolylene diisocyanate, and urethane prepolymers having an isocyanate type at both ends.

Examples of diols include ethylene glycol, dipropylene glycol, tetraethylene glycol, 1,4-butanediol, 1,4-cyclohexanediol, dihydroxynaphthalene, and bisphenol A.

Examples of polyester-based elastomers include polyester-polyether type copolymers (copolymers of polybutylene terephthalate and tetramethylene oxide glycol, etc.) and polyester-polyester type copolymers (copolymers of polybutylene terephthalate and polybutylene adipate, etc.).

The amount of the thermoplastic elastomer in the coating composition for an electrical steel sheet with respect to a total amount of 100 parts by mass of the epoxy resin and the latent epoxy resin curing agent is 10 parts by mass or more and less than 40 parts by mass. When the amount of the thermoplastic elastomer is equal to or larger than the lower limit value, core iron loss is favorable. When the amount of the thermoplastic elastomer is equal to or less than the upper limit value, the adhesive strength at a high temperature is maintained.

In general, when the adhesive strength at a high temperature is secured, an epoxy resin adhesive having high heat resistance has too large a Young's modulus near room temperature, stress is applied to the steel sheet, and core iron loss deteriorates. On the other hand, the heat resistance deteriorates with a resin composition having an appropriate strength near room temperature. In the present invention, a thermoplastic elastomer that has a soft segment and a hard segment and has a large bending elastic modulus is finely dispersed in an epoxy resin. Accordingly, stress applied near room temperature is minimized and deterioration of core iron loss is minimized. In addition, since the thermoplastic elastomers are not connected to each other, flowing of the epoxy resin at a high temperature is minimized and the adhesive strength is secured. When a specific amount of such a specific thermoplastic elastomer is used, both core iron loss and heat resistance near room temperature are achieved.

In the present invention, since an insulation coating can be formed with such a coating composition for an electrical steel sheet, and stress applied to the electrical steel sheet can be reduced, it can be suitably applied to a thin electrical steel sheet which is effective in reducing iron loss. More specifically, the coating composition for an electrical steel sheet of the present invention is particularly effective as a coating composition for forming an insulation coating on the surface of a base steel sheet having an average sheet thickness of 0.30 mm or less.

The insulation coating 3 can be formed, for example, by applying a coating liquid in which a coating composition for an electrical steel sheet is dissolved in a solvent onto the surface of the base steel sheet, drying and baking it. The solvent used for a coating liquid is not particularly limited as long as it can dissolve a coating composition for an electrical steel sheet, and it is preferable to use an aqueous solution in order to prevent the organic solvent from being emitted. The lower limit value of the end-point temperature during baking is preferably 120°C, and more preferably 150°C. The upper limit value of the end-point temperature during baking is preferably 250°C, and more preferably 230°C.

The lower limit value of the baking time is preferably 5 seconds, and more preferably 8 seconds. The upper limit value of the baking time is preferably 60 seconds, and more preferably 30 seconds.

The upper and lower limit values of an average thickness t1 of the insulation coating 3 are set, for example, as follows, in consideration of a case in which the material 1 is used for the electrical steel sheet 40.

When the material 1 is used for the electrical steel sheet 40, the average thickness t1 of the insulation coating 3 (the thickness per one surface of the electrical steel sheet 40 (the material 1)) is adjusted so that the insulation performance and adhesive ability between the electrical steel sheets 40 laminated with each other can be secured.

In the case of the insulation coating 3 having a single-layer structure, the average thickness t1 of the insulation coating 3 (the thickness per one surface of the electrical steel sheet 40 (the material 1)) may be, for example, 1.5 µm or more and 8.0 µm or less.

In the case of the insulation coating 3 having a multi-layer structure, the average thickness of the underlying insulation coating may be, for example, 0.3 µm or more and 2.5 µm or less, and is preferably 0.5 µm or more and 1.5 µm or less. The average thickness of the top insulation coating may be, for example, 1.5 µm or more and 8.0 µm or less.

Here, a method of measuring the average thickness t1 of the insulation coating 3 in the material 1 is the same as that of the average sheet thickness t0 of the material 1, and the average thickness can be determined by obtaining the thickness of the insulation coating 3 at a plurality of locations and averaging these thicknesses.

The upper and lower limit values of the average thickness t1 of the insulation coating 3 in the material 1 can be naturally used as the upper and lower limit values of the average thickness t1 of the insulation coating 3 in the electrical steel sheet 40. Here, a method of measuring the average thickness t1 of the insulation coating 3 in the electrical steel sheet 40 is, for example, the following measurement method. For example, among the plurality of electrical steel sheets forming the laminated core, the electrical steel sheet 40 positioned on the outmost side in the lamination direction (the electrical steel sheet 40 whose surface is exposed in the lamination direction) is selected. On the surface of the selected electrical steel sheet 40, a predetermined position in the radial direction (for example, a position exactly at the middle (center) between the inner peripheral edge and the outer peripheral edge of the electrical steel sheet 40) is selected. At the selected position, the thickness of the insulation coating 3 of the electrical steel sheet 40 is measured at four locations (that is, every 90 degrees around the center axis O) at equal intervals in the circumferential direction. The average value of the measured thicknesses at four locations can be set as the average thickness t1 of the insulation coating 3.

Here, the reason why the average thickness t1 of the insulation coating 3 is measured on the electrical steel sheet 40 positioned on the outmost side in the lamination direction in this manner is that the insulation coating 3 is formed so that the thickness of the insulation coating 3 hardly changes at the lamination position in the lamination direction of the electrical steel sheet 40.

The electrical steel sheet 40 is produced by punching the material 1 as described above, and the laminated core (the stator core 21 and the rotor core 31) is produced using the electrical steel sheet 40.

### (Method of laminating laminated core)

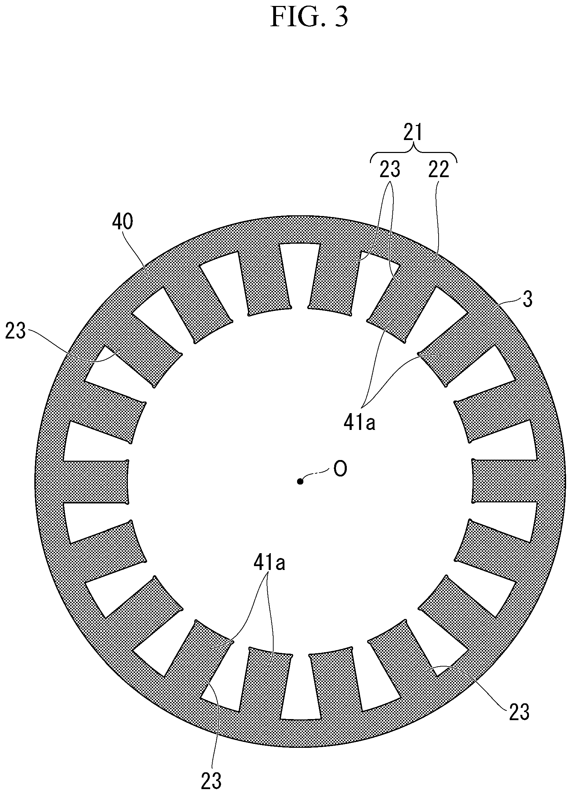

Hereinafter, description will return to the laminated core. As shown in Fig. 3, the plurality of electrical steel sheets 40 forming the stator core 21 are laminated via the insulation coating 3.

The electrical steel sheets 40 adjacent to each other in the lamination direction are adhered over the entire surface with the insulation coating 3. In other words, a surface of the electrical steel sheet 40 (hereinafter referred to as a first surface) facing the lamination direction is an adhesive area or region 41a over the entire surface. However, the electrical steel sheets 40 adjacent to each other in the lamination direction may not be adhered over the entire surface. In other words, on the first surface of the electrical steel sheet 40, the adhesive area or region 41a and the non-adhesive area or region (not shown) may be mixed.

In the present embodiment, the plurality of electrical steel sheets forming the rotor core 31 are fixed to each other by a fastening 42 (joggle) shown in Fig. 1. However, the plurality of electrical steel sheets forming the rotor core 31 may also have a laminate structure fixed by the insulation coating 3 as in the stator core 21.

In addition, the laminated core such as the stator core 21 and the rotor core 31 may be formed by so-called rotating stacking.

### (Method of producing laminated core)

The stator core 21 is produced, for example, using a production device 100 shown in Fig. 7. Hereinafter, in description of the production method, first, the laminated core production device 100 (hereinafter simply referred to as the production device 100) will be described.

In the production device 100, while the material 1 is sent out from the coil 1A (hoop) in the arrow F direction, it is punched a plurality of times using molds arranged on stages, and gradually formed into the shape of the electrical steel sheet 40. Then, the punched electrical steel sheets 40 are laminated and pressurized while raising the temperature. As a result, the electrical steel sheets 40 adjacent to each other in the lamination direction are adhered to each other with the insulation coating 3 (that is, a part of the insulation coating 3 positioned in the adhesive area or region 41a is caused to exhibit an adhesive ability), and the adhesion is completed.

As shown in Fig. 7, the production device 100 includes a plurality of stages of punching stations 110. The punching station 110 may have two stages or three or more stages. The punching station 110 of each stage includes a female mold 111 arranged below the material 1 and a male mold 112 arranged above the material 1.

The production device 100 further includes a lamination station 140 at a position downstream from the most downstream punching station 110. The lamination station 140 includes a heating device 141, an outer peripheral punching female mold 142, a heat insulation member 143, an outer peripheral punching male mold 144, and a spring 145.

The heating device 141, the outer peripheral punching female mold 142, and the heat insulation member 143 are arranged below the material 1. On the other hand, the outer peripheral punching male mold 144 and the spring 145 are arranged above the material 1. Here, reference numeral 21 indicates a stator core.

In the production device 100 having the configuration described above, first, the material 1 is sequentially sent out from the coil 1A in the arrow F direction in Fig. 7. Then, the material 1 is sequentially punched on the plurality of stages of punching stations 110. According to these punching procedures, in the material 1, the shape of the electrical steel sheet 40 having the core back part 22 and the plurality of teeth parts 23 shown in Fig. 3 is obtained. However, since the material is not completely punched at this time, it proceeds to the next process in the arrow F direction.

Then, finally, the material 1 is sent out to the lamination station 140, punched out by the outer peripheral punching male mold 144, and laminated with high accuracy. During this lamination, the electrical steel sheet 40 receives a certain pressurizing force from the spring 145. When the punching process and the lamination process as described above are sequentially repeated, a predetermined number of electrical steel sheets 40 can be stacked. In addition, the laminated core formed by stacking the electrical steel sheets 40 in this manner is heated to for example, a temperature of 200°C, by the heating device 141. According to this heating, the insulation coatings 3 of the adjacent electrical steel sheets 40 are adhered to each other.

Here, the heating device 141 may not be arranged on the outer peripheral punching female mold 142. That is, it may be taken out of the outer peripheral punching female mold 142 before the electrical steel sheet 40 laminated with the outer peripheral punching female mold 142 is adhered. In this case, the outer peripheral punching female mold 142 may not have the heat insulation member 143. In addition, in this case, the stacked electrical steel sheets 40 before adhesion may be sandwiched and held from both sides in the lamination direction with a jig (not shown) and then transported and heated.

According to the above processes, the stator core 21 is completed.

As described above, in the present invention, an insulation coating is formed on the surface of the electrical steel sheet using a coating composition for an electrical steel sheet in which an epoxy resin, a latent epoxy resin curing agent and a specific thermoplastic elastomer are combined at a specific ratio. Accordingly, it is possible to achieve both an excellent magnetic property (core iron loss) of the laminated core and excellent heat resistance with which the adhesive strength between electrical steel sheets can be maintained even in a high temperature state during driving.

Here, the technical scope of the present invention is not limited to the above embodiment, and various modifications can be made without departing from the spirit of the present invention.

The shape of the stator core is not limited to the form shown in the above embodiment. Specifically, the sizes of the outer diameter and the inner diameter of the stator core, the lamination thickness, the number of slots, the size ratio between the circumferential direction and the radial direction of the teeth part, the size ratio between the teeth part and the core back part in the radial direction, and the like can be arbitrarily designed according to desired properties of the electric motor.

In the rotor in the above embodiment, a pair of permanent magnets 32 form one magnetic pole, but the present invention is not limited thereto. For example, one permanent magnet 32 may form one magnetic pole, or three or more permanent magnets 32 may form one magnetic pole.

One embodiment and examples of the present invention have been described above. However, the technical scope of the present invention is not limited to the above embodiments and examples, and various modifications can be made without departing from the spirit of the present invention.

For example, the shape of the stator core 21 is not limited to the form shown in the above embodiment. Specifically, the sizes of the outer diameter and the inner diameter of the stator core 21, the lamination thickness, the number of slots, the size ratio between the circumferential direction and the radial direction of the teeth part 23, the size ratio between the teeth part 23 and the core back part 22 in the radial direction, and the like can be arbitrarily designed according to desired properties of the electric motor.

In the rotor 30 in the above embodiment, a pair of permanent magnets 32 form one magnetic pole, but the present invention is not limited to this form. For example, one permanent magnet 32 may form one magnetic pole or three or more permanent magnets 32 may form one magnetic pole.

In the above embodiment, the permanent magnet field type electric motor has been described as the electric motor 10 as an example, but the structure of the electric motor 10 is not limited to this as exemplified below, and additionally various known structures not provided as an exemplary example below can be used.

In the above embodiment, the permanent magnet field type electric motor has been described as the electric motor 10 as an example, but the present invention is not limited thereto. For example, the electric motor 10 may be a reluctance type electric motor or an electromagnet field type electric motor (winding field type electric motor).

In the above embodiment, the synchronous electric motor has been described as the AC electric motor as an example, but the present invention is not limited thereto. For example, the electric motor 10 may be an induction electric motor

In the above embodiment, the AC electric motor has been described as the electric motor 10 as an example, but the present invention is not limited thereto. For example, the electric motor 10 may be a DC electric motor.

In the above embodiment, the electric motor has been described as the electric motor 10 as an example, but the present invention is not limited thereto. For example, the electric motor 10 may be a generator.

In addition, constituent elements in the above embodiment can be appropriately replaced with well-known constituent elements without departing from the spirit of the present invention, and the above modified examples may be appropriately combined.

### [Examples]

Hereinafter, the present invention will be described in detail with reference to examples, but the present invention is not limited to the following description.

### [Raw materials]

Raw materials used in examples are as follows.

### (Epoxy resin)

E1: cresol novolak type epoxy resin
E2: phenol novolak type epoxy resin
E3: bisphenol A type epoxy resin

### (Latent epoxy resin curing agent)

A1: phenol resol resin
A2: dicyandiamide
A3: diaminodiphenyl ethane

### (Thermoplastic elastomer)

B1: olefin-based elastomer (melting point: 110°C, bending elastic modulus: 10 MPa)
B2: urethane-based elastomer (melting point: 130°C, bending elastic modulus: 40 MPa)
B3: urethane-based elastomer (melting point: 160°C, bending elastic modulus: 60 MPa)
B4: polyester-based elastomer (melting point: 180°C, bending elastic modulus: 80 MPa)

### (Thermoplastic elastomer (for comparison))

C1: polyester-based elastomer (melting point: 210°C, bending elastic modulus: 90 MPa)
C2: olefin-based elastomer (melting point: 90°C, bending elastic modulus: 60 MPa)
C3: polyester-based elastomer (melting point: 180°C, bending elastic modulus: 150 MPa)
C4: olefin-based elastomer (melting point: 105°C, bending elastic modulus: 5 MPa)
C5: polyamide-based elastomer (melting point: 160°C, bending elastic modulus: 150 MPa)
C6: polyester-based elastomer (melting point: 220°C, bending elastic modulus: 120 MPa)
C7: styrene-based elastomer (melting point: 105°C, bending elastic modulus: 5 MPa)
C8: urethane-based elastomer (melting point: 130°C, bending elastic modulus: 80 MPa)

### [Magnetic property]

A square electrical steel sheet (single sheet) having a size of 55 mm×55 mm was cut out from the electromagnetic steel strip of each example, and two electrical steel sheets were laminated and adhered under conditions of a steel sheet temperature of 200°C, a pressure of 10 MPa, and a pressurization time of 1 hour to produce a laminated core. For the obtained laminated core, according to a single sheet magnetic measurement method specified in JIS C2556, single sheet magnetic properties in the rolling direction and a direction perpendicular to the rolling direction are measured, and an average value of these values is obtained as the magnetic property. Here, for the magnetic property (magnetism), "W10/400 (W/kg)" is evaluated as the iron loss. "W10/400" is the iron loss when the frequency is 400 Hz and the maximum magnetic flux density is 1.0 T.

### [Adhesive strength]

Two rectangular electrical steel sheets (single sheets) having a width of 30 mm and a length of 60 mm were cut out from the electromagnetic steel strip of each example, and tip parts having a width of 30 mm and a length of 10 mm were made to overlap each other, and adhered at a steel sheet temperature of 200°C, a pressure of 10 MPa, and a pressurization time of 1 hour to produce a sample. The shear tensile strength was measured at an atmosphere temperature of 25°C or 150°C and a tensile speed of 2 mm/min, and the numerical value divided by the adhesion area was set as the adhesive strength (MPa).

### [Determination]

A determination was made for each of the examples according to the following criteria. Very good is considered to be satisfactory.

Very good: the adhesive strength at 25°C was more than 5 MPa, the adhesive strength at 150°C was more than 0.5 MPa, and the magnetic property was less than 12 W/kg.

Good: the adhesive strength at 25°C was 5 MPa or less, or the adhesive strength at 150°C was 0.5 MPa or less, but the adhesive strength at 25°C was 3 MPa or more, the adhesive strength at 150°C was 0.2 MPa or more, and the magnetic property was less than 12 W/kg.

Poor: any one or more of the adhesive strength of 3 MPa or more at 25°C, the adhesive strength of 0.2 MPa or more at 150°C, and the magnetic property of less than 12 W/kg was not satisfied.

### [Example 1]

As a base steel sheet, a non-oriented electrical steel sheet containing, in mass%, Si: 3.0%, Mn: 0.2%, and Al: 0.5%, with the remainder being Fe and impurities and having a sheet thickness of 0.25 mm and a width of 100 mm was used.

Components shown in Table 1 were mixed to prepare an aqueous solution containing a coating composition for an electrical steel sheet having a solid content concentration of 25 mass%. When it was difficult to dissolve, 5 mass% or less of a dissolution aid such as an alcohol or cellosolves was added. An aqueous solution containing the obtained coating composition for an electrical steel sheet was applied to the surface of the base steel sheet and fired at 200°C for 10 seconds, and an insulation coating having an average thickness of 3 µm was formed to obtain an electromagnetic steel strip.

### [Examples 2 to 7 and Comparative Examples 1 to 11]

Electromagnetic steel strips were obtained in the same manner as in Example 1 except that the formulation and baking conditions of the coating composition for an electrical steel sheet were changed as shown in Table 1.

Table 1 shows the formulations and baking conditions of the coating compositions for an electrical steel sheet of the examples. Here, the "ratio Q" in Table 1 is the amount of the thermoplastic elastomer when a total amount of the epoxy resin and the latent epoxy resin curing agent is 100 parts.

**[Table 1]**

| | Epoxy resin | | Latent epoxy resin curing agent | | Thermoplastic elastomer | | | Baking conditions | |
|---|---|---|---|---|---|---|---|---|---|
| | Type | Parts by mass | Type | Parts by mass | Type | Parts by mass | Ratio Q | End-point temperature [°C] | Time [seconds] |
| Example 1 | E1 | 100 | A1 | 3 | B1 | 30 | 29.1 | 200 | 10 |
| Example 2 | E1 | | A1 | 3 | B1 | 13 | 12.6 | 200 | 10 |
| Example 3 | E1 | | A1 | 3 | B2 | 25 | 24.3 | 200 | 10 |
| Example 4 | E2 | | A3 | 2 | B2 | 15 | 14.7 | 200 | 20 |
| Example 5 | E2 | | A3 | 2 | B3 | 35 | 34.3 | 200 | 20 |
| Example 6 | E3 | | A2 | 14 | B3 | 16 | 14.0 | 160 | 10 |
| Example 7 | E3 | | A2 | 14 | B4 | 30 | 26.3 | 160 | 10 |
| Comparative Example 1 | E1 | | A1 | 1 | B2 | 50 | 49.5 | 200 | 20 |
| Comparative Example 2 | E1 | | A1 | 4 | B2 | 5 | 4.8 | 200 | 10 |
| Comparative Example 3 | E1 | | A1 | 4 | C1 | 20 | 19.2 | 200 | 10 |
| Comparative Example 4 | E3 | | A2 | 14 | C2 | 20 | 17.5 | 160 | 20 |
| Comparative Example 5 | E3 | | A2 | 14 | C3 | 25 | 21.9 | 160 | 20 |
| Comparative Example 6 | E2 | | A3 | 1 | C4 | 25 | 24.8 | 200 | 20 |
| Comparative Example 7 | E2 | | A2 | 4 | C5 | 30 | 28.8 | 200 | 10 |
| Comparative Example 8 | E2 | | A2 | 4 | C6 | 30 | 28.8 | 200 | 10 |
| Comparative Example 9 | E1 | | A1 | 3 | C7 | 30 | 29.1 | 200 | 10 |
| Comparative Example 10 | E1 | | A1 | 3 | C8 | 25 | 24.3 | 200 | 20 |
| Comparative Example 11 | E1 | | A1 | 3 | - | - | - | 200 | 10 |

Table 2 shows the evaluation results of the magnetic property (magnetism) and the adhesive strength of the examples.

**[Table 2]**

| | Adhesive strength [MPa] | | Magnetism [W/kg] | Determination |
|---|---|---|---|---|
| | 25°C | 150°C | W10/400 | |
| Example 1 | 12.0 | 3.0 | 10.7 | Very good |
| Example 2 | 10.0 | 3.0 | 10.9 | Very good |
| Example 3 | 12.0 | 1.0 | 11.3 | Very good |
| Example 4 | 6.0 | 3.0 | 11.1 | Very good |
| Example 5 | 8.0 | 1.0 | 11.7 | Very good |
| Example 6 | 12.0 | 3.0 | 11.6 | Very good |
| Example 7 | 11.0 | 3.0 | 11.4 | Very good |
| Comparative Example 1 | 6.0 | 0.4 | 11.3 | Good |
| Comparative Example 2 | 16.0 | 4.0 | 12.5 | Poor |
| Comparative Example 3 | 13.0 | 4.0 | 12.3 | Poor |
| Comparative Example 4 | 4.0 | 0.3 | 11.9 | Good |
| Comparative Example 5 | 13.0 | 3.0 | 12.1 | Poor |
| Comparative Example 6 | 4.0 | 0.3 | 11.1 | Good |
| Comparative Example 7 | 14.0 | 1.0 | 12.9 | Poor |
| Comparative Example 8 | 12.0 | 0.6 | 12.0 | Poor |
| Comparative Example 9 | 3.0 | 0.2 | 11.4 | Good |
| Comparative Example 10 | 6.4 | 0.3 | 11.1 | Good |
| Comparative Example 11 | 15.0 | 3.0 | 13.8 | Poor |

As shown in Table 2, in Examples 1 to 7 in which an epoxy resin, a latent epoxy resin curing agent and a specific thermoplastic elastomer were combined at a specific ratio, sufficient adhesive strength was secured even at 150°C, the heat resistance was excellent, and the magnetic property was excellent.

On the other hand, in Comparative Examples 1 to 10 in which the amount, the melting point and the bending elastic modulus of the thermoplastic elastomer were outside the scope of the present invention, both the heat resistance and the magnetic property could not be achieved. In Comparative Example 11 in which no thermoplastic elastomer was mixed, the magnetic property was inferior.

### [Industrial Applicability]

According to the present invention, it is possible to achieve both the heat resistance and magnetic property of the laminated core. Therefore, its industrial availability is great.

### [Brief Description of the Reference Symbols]

1 Material
2 Base steel sheet
3 Insulation coating
10 Electric motor
20 Stator
21 Stator core
40 Electrical steel sheet

## Claims

1. A coating composition for an electrical steel sheet, comprising an epoxy resin, a latent epoxy resin curing agent, and a thermoplastic elastomer,
wherein the thermoplastic elastomer has a melting point of 100°C or higher and 200°C or lower and a bending elastic modulus of more than 5 MPa and 100 MPa or less, and
wherein the amount of the thermoplastic elastomer with respect to a total amount of 100 parts by mass of the epoxy resin and the latent epoxy resin curing agent is 10 parts by mass or more and less than 40 parts by mass.

2. The coating composition for an electrical steel sheet according to claim 1,
wherein the thermoplastic elastomer is at least one selected from among an olefin-based elastomer, a urethane-based elastomer and a polyester-based elastomer.

3. An electrical steel sheet having an insulation coating formed by applying the coating composition for an electrical steel sheet according to claim 1 or 2 to the surface of a base steel sheet.

4. The electrical steel sheet according to claim 3,
wherein the base steel sheet has an average sheet thickness of 0.30 mm or less.

5. A laminated core in which a plurality of electrical steel sheets according to claim 3 or 4 are laminated and are adhered to each other.

6. An electric motor comprising the laminated core according to claim 5.
